# EUROPÄISCHE PATENTANMELDUNG

(11) **EP 4 830 540 A1**
(43) Veröffentlichungstag der Anmeldung: **28.10.2026**
(21) Anmeldenummer: 25171973.8
(22) Anmeldetag: 23.04.2025
(51) Int. Cl.: A23P 30/38

(54) **POPCORNMASCHINE**

(71) Anmelder: Jodlbauer, Wolfgang, 94081 Fürstenzell (DE)
(72) Erfinder: Jodlbauer, Wolfgang, 94081 Fürstenzell (DE)
(74) Vertreter: advotec.

(57) **Zusammenfassung**

Die Erfindung betrifft eine Popcornmaschine zur Herstellung von Popcorn aus Mais, umfassend eine Heizeinheit (4) mit einem Heizelement (10) und eine Puffeinheit (6). Die Puffeinheit (6) ist über eine Schwenkeinheit derart schwenkbar mit der Heizeinheit (4) verbunden, dass die Puffeinheit (6) zwischen einer ersten Schwenkposition, in der die Puffeinheit (6) insbesondere auf dem Heizelement (10) aufliegt, und einer zweiten Schwenkposition schwenkbar ist, in der die Puffeinheit (6) von dem Heizelement (10) beabstandet ist. Die Puffeinheit (6) umfasst eine Bodenwanne (12), die lösbar an einem Ringkörper (14) der Puffeinheit (6) fixiert ist.

## Beschreibung

Die vorliegende Erfindung betrifft eine Popcornmaschine zur Herstellung von Popcorn aus Puffmais, umfassend eine Heizeinheit und eine Puffeinheit.

Popcornmaschinen sind in verschiedenen Ausgestaltungsformen aus dem Stand der Technik bekannt. Die bekannten Popcornmaschinen umfassen regelmäßig eine Puffeinheit und eine Heizeinheit. In die Puffeinheit wird Mais eingefüllt. Die Puffeinheit wird dann mittels der Heizeinheit derart erhitzt, dass der Mais zu Popcorn aufplatzt bzw. aufpoppt. Die bekannten Puffeinheiten sind regelmäßig in Form eines einteiligen Behälters ausgestaltet, der eine Öffnung zum Einbringen des Maises und zum Ausbringen des Popcorns aufweist. Die Öffnung ist klein gehalten, um ein ungewolltes Austreten von Popcorn, insbesondere im Rahmen der Popcornherstellung, auszuschließen oder zumindest zu reduzieren. Durch die einteilige Ausgestaltung der Puffeinheit sowie die kleine Öffnung dieser gestaltet sich eine Reinigung der Puffeinheit schwierig.

Aufgabe der vorliegenden Erfindung ist es, eine Popcornmaschine bereitzustellen, welche auf einfache Weise reinigbar ist. Diese Aufgabe ist erfindungsgemäß durch die Popcornmaschine mit den Merkmalen des Patentanspruchs 1 gelöst.

Erfindungsgemäß wird also eine Popcornmaschine zur Herstellung von Popcorn aus Mais bereitgestellt, welche eine Heizeinheit mit einem Heizelement und eine Puffeinheit umfasst. Die Puffeinheit ist über eine Schwenkeinheit zwischen einer ersten Schwenkposition und einer zweiten Schwenkposition schwenkbar mit der Heizeinheit verbunden. In der ersten Schwenkposition liegt die Puffeinheit insbesondere auf dem Heizelement der Heizeinheit auf oder ist nahe dem Heizelement angeordnet, insbesondere näher als in der zweiten Schwenkposition, so dass mittels des Heizelements die Puffeinheit erhitzbar ist. In der zweiten Schwenkposition ist die Puffeinheit von dem Heizelement beabstandet, insbesondere weiter als in der ersten Schwenkposition. Die Puffeinheit weist eine Bodenwanne auf, die lösbar an einem Ringkörper der Puffeinheit fixiert ist.

Durch das schwenkbare Anbinden der Puffeinheit an der Heizeinheit ist die Puffeinheit auf einfache Weise zwischen der ersten Position und der zweiten Position definiert schwenkbar. Somit kann in der ersten Position, in welcher die Puffeinheit mit der Heizeinheit in Kontakt ist, aus Mais Popcorn hergestellt werden, wobei das hergestellte Popcorn sodann durch Schwenken der Puffeinheit relativ zu der Heizeinheit aus der Puffeinheit ausbringbar ist. Zudem ist durch das schwenkbare Anbinden der Heizeinheit an der Puffeinheit, insbesondere an dem Ringkörper der Puffeinheit, die lösbar an dem Ringkörper fixierte Bodenwanne der Puffeinheit zugänglich, so dass diese von dem Ringkörper entfernt werden kann. Im nicht montierten Zustand kann die Bodenwanne auf einfache Weise gereinigt werden.

In der ersten Schwenkposition ist die Puffeinheit, insbesondere die Bodenwanne, beispielsweise in einer Vertiefung der Heizeinheit angeordnet.

Die Vertiefung kann beispielsweise bodenseitig von dem Heizelement begrenzt sein. Das Heizelement kann also durch die Vertiefung zugänglich bzw. oben, d.h. an der Heizseite, freigelegt sein.

In der zweiten Schwenkposition ist die Puffeinheit beispielsweise, insbesondere vollständig, aus der Vertiefung entfernt.

Die Geometrie der Vertiefung korrespondiert beispielsweise mit einer Geometrie der Puffeinheit, insbesondere der Bodenwanne. Insbesondere ist die Bodenwanne, wenn die Puffeinheit in der ersten Schwenkposition ist, teilweise oder vollständig in der Vertiefung angeordnet.

Das Heizelement kann ein Ceranfeld sein. Beliebige andere Heizelemente sind ebenfalls denkbar.

Bei einer beispielhaften Ausführungsform der Popcornmaschine nach der Erfindung liegt die Bodenwanne in der ersten Schwenkposition flächig auf dem Heizelement auf.

Bei einer bespielhaften Ausführungsform der Popcornmaschine nach der Erfindung ist das Heizelement an einem Gehäuse der Heizeinheit federnd gelagert.

Beispielsweise ist das Heizelement an dem Gehäuse über mindestens ein Lager federnd gelagert. Es können zwei, drei oder vier Lager zur gehäusefesten, federnden Lagerung der Heizeinheit vorgesehen sein, auf welchen das Heizelement insbesondere in Randbereichen aufliegt.

Beispielsweise sind die Lager derart ausgestaltet, dass diese eine Bewegung des Heizelements in eine Richtung orthogonal zu einer Quererstreckungsebene des Heizelements, insbesondere in Popcornmaschinen-Hochrichtung, um einen definierten Weg ermöglichen.

Das mindestens eine Lager umfasst beispielsweise eine Spiralfeder. Die Spiralfeder kann an einem ersten Ende gehäusefest, also zu dem Gehäuse der Heizeinheit unbeweglich, gelagert sein. Mit dem zweiten Ende kann die Spiralfeder direkt oder indirekt an dem Heizelement anliegen.

Beispielsweise liegt das mindestens eine Lager auf einer Lagerplatte auf, welche an dem Gehäuse fest fixiert ist und sich insbesondere parallel zu dem Heizelement erstreckt. Es ist ebenfalls denkbar, dass das mindestens eine Lagerelement an einem Gehäusevorsprung aufliegt.

Bei einer bevorzugten Ausführungsform der Popcornmaschine nach der Erfindung greift die Schwenkeinheit an dem Ringkörper an. Somit ist keine Demontage der Puffeinheit von der Heizeinheit zur Reinigung der Bodenwanne erforderlich. Vielmehr kann die Bodenwanne, wenn die Heizeinheit in der zweiten Schwenkposition ist, auf einfache Weise von dem Ringkörper gelöst und sodann gereinigt werden.

Die Schwenkeinheit umfasst beispielsweise mindestens ein Scharnier, insbesondere zwei Scharniere, oder ist aus diesem bzw. diesen gebildet.

Bei einer beispielhaften Ausführungsform der Popcornmaschine nach der Erfindung umfasst die Puffeinheit einen Deckel.

Der Deckel kann an dem Ringkörper lösbar fixiert sein.

Beispielsweise verschließt der Deckel den Ringkörper an einer der Bodenwanne gegenüberliegenden Seite.

Der Deckel ist beispielsweise mittels einer Befestigungsanordnung an dem Ringkörper fixierbar.

Die Befestigungsanordnung kann mindestens eine schwenkbar an dem Ringkörper oder an dem Deckel gelagerte Gewindeschraube umfassen, auf welche eine Mutter aufgeschraubt ist, wobei der Deckel bzw. der Ringkörper mindestens eine Befestigungselementaufnahme umfasst. Die Befestigungselementaufnahme weist eine seitliche Einkerbung auf, in welche die Schraube einbringbar ist. Durch Aufschrauben der Mutter auf die Schraube bis die Mutter auf der Befestigungsaufnahme zur Anlage kommt, ist der Deckel lösbar an dem Ringkörper fixiert.

Bei einer bevorzugten Ausführungsform der Popcornmaschine nach der Erfindung umfasst die Puffeinheit eine Rühreinheit und eine Antriebseinheit zum Antreiben der Rühreinheit.

Die Rühreinheit kann in einem Puffraum angeordnet sein, welchen die Bodenwanne, der Ringkörper und/oder der Deckel definieren.

Die Rühreinheit umfasst beispielsweise eine mit der Antriebseinheit, insbesondere lösbar oder fest verbundene Antriebswelle.

Die Puffeinheit kann einen Temperatursensor umfassen, mittels welchem insbesondere eine Temperatur der Bodenwanne erfassbar ist.

Beispielsweise liegt der Temperatursensor an der Bodenwanne an, wenn die Puffeinheit in einem zusammengebauten Zustand ist.

Der Temperatursensor kann an der Rühreinheit, insbesondere der Antriebswelle, starr fixiert sein, bevorzugt an einem der Antriebseinheit abgewandten Ende der Antriebswelle, oder beweglich an der Antriebswelle gelagert sein.

Die Antriebswelle ist beispielsweise ein Hohlrohr das insbesondere zumindest an einem der Antriebseinheit abgewandten Ende offen ist oder eine Öffnung umfasst, durch welche der Temperatursensor zumindest teilweise aus dem Hohlrohr austreten kann oder herausragt.

In dem Hohlrohr kann ein Federelement, insbesondere in Form einer Spiralfeder, angeordnet sein. Das Federelement beaufschlagt den Temperatursensor beispielsweise mit einer in Richtung der Bodenwanne wirkenden (Druck-)Kraft. Somit wird sichergestellt, dass der Temperatursensor in einer gewünschten Messposition ist, insbesondere an der Bodenwanne anliegt und/oder nahe der Bodenwanne angeordnet ist.

Beispielsweise ist das Federelement und/oder der Temperatursensor in einem Führungsrohr angeordnet, das insbesondere fest mit der Antriebswelle verbunden ist.

Beispielsweise ist das Führungsrohr in dem Hohlrohr angeordnet, insbesondere derart, dass deren Mittelachsen einander entsprechen. Das Führungsrohr weist also beispielsweise einen kleineren Durchmesser auf als das Hohlrohr.

Die Rühreinheit kann mindestens einen Rührkamm aufweisen, der sich insbesondere in Puffeinheit-Querrichtung erstreckt.

Die Puffeinheit-Querrichtung entspricht beispielsweise der Popcornmaschinen-Querrichtung, wenn die Puffeinheit in der ersten Schwenkposition ist.

Beispielsweise ist der mindestens eine Rührkamm an der Antriebswelle fixiert, insbesondere lösbar oder fest. Es ist ebenfalls denkbar, dass der mindestens eine Rührkamm einteilig mit der Antriebswelle ausgebildet ist.

Der Rührkamm kann sich orthogonal zu der Antriebswelle erstrecken.

Beispielsweise umfasst die Rühreinheit zwei, drei oder vier Rührkämme, die insbesondere über ein Verbindungselement miteinander verbunden sind.

Das Verbindungselement ist beispielsweise lösbar mit der Antriebswelle verbindbar, insbesondere auf die Antriebswelle endseitig aufschiebbar und dort bevorzugt verrastbar.

Bei einer bevorzugten Ausführungsform der Popcornmaschine nach der Erfindung ist die Antriebseinheit an oder in dem Deckel vorgesehen. Die Antriebeinheit kann also beispielsweise auf einer dem Ringkörper abgewandten Seite auf dem Deckel angeordnet sein oder vollständig von dem Deckel umschlossen sein. Somit kann die Rühreinheit beim Verschwenken der Puffeinheit relativ zu der Heizeinheit weiter von der Antriebseinheit angetrieben werden, insbesondere rotiert werden. Dies vereinfacht ein Ausbringen des Popcorns aus der Puffeinheit.

Bei einer beispielhaften Ausführungsform der Popcornmaschine nach der Erfindung umfasst der Ringkörper eine, insbesondere seitliche, Aussparung zum Ausbringen von Popcorn aus der Puffeinheit.

Die Aussparung weist beispielsweise ein U-förmiges oder halbkreisförmiges Profil auf.

Die Aussparung kann sich bis zu einem dem Deckel zugewandten Ende des Ringkörpers erstrecken.

Die Aussparung ist beispielsweise mit einem Verschlusselement verschließbar. Das Verschlusselement kann in Form eines dünnen Blechs ausgestaltet sein.

Das Verschlusselement kann zwischen einer die Aussparung verschließenden Verschlussposition und einer die Aussparung freigebenden Freigabeposition, insbesondere mittels Scharnieren, schwenkbar an dem Deckel gelagert sein.

Bei einer bevorzugten Ausführungsform der Popcornmaschine nach der Erfindung ist das Verschlusselement derart an dem Deckel gelagert, dass ein Verschwenken der Puffeinheit aus der ersten Position in die zweite Position ein Verschwenken des Verschlusselements aus der Verschlussposition in die Freigabeposition bewirkt. Die Aussparung wird also automatisch freigelegt, wenn die Puffeinheit in die zweite Schwenkposition geschwenkt wird.

Bei einer beispielhaften Ausführungsform umfasst die Popcornmaschine nach der Erfindung eine Gasfeder zur Unterstützung einer Schwenkbewegung der Puffeinheit.

Beispielsweise ist die Gasfeder in dem Gehäuse der Heizeinheit angeordnet.

Die Gasfeder kann an einem ersten Ende gehäusefest gelagert sein, insbesondere derart, dass diese zu dem Gehäuse um genau eine Achse rotierbar ist, nicht aber relativ zu dem Gehäuse translatorisch bewegbar ist.

Beispielsweise ist die Gasfeder an ihrem zweiten Ende über eine Umlenkanordnung mit der Puffeinheit, insbesondere dem Ringkörper, derart verbunden, dass die Gasfeder ein Verschwenken der Puffeinheit aus der ersten Schwenkposition in die zweite Schwenkposition unterstützt, das heißt die Puffeinheit mit einer in Richtung der zweiten Schwenkposition wirkenden Kraft beaufschlagt.

Die Gasfeder kann an ihrem zweiten Ende über die Umlenkanordnung derart mit der Puffeinheit, insbesondere dem Ringkörper, verbunden sein, dass die Umlenkanordnung ein Verschwenken der Puffeinheit in die erste Schwenkposition dämpft, das heißt die Puffeinheit mit einer entgegen der Schwenkbewegung aus der zweiten Schwenkposition in die erste Schwenkposition wirkenden Kraft beaufschlagt.

Beispielsweise ist die Gasfeder über die Umlenkanordnung derart mit der Puffeinheit verbunden, dass ein Verschwenken der Puffeinheit aus der zweiten Schwenkposition in die erste Schwenkposition ein Spannen der Gasfeder bewirkt.

Die Popcornmaschine kann einen Schwenkhebel zum Verschwenken der Puffeinheit zwischen der ersten Schwenkposition und der zweiten Schwenkposition umfassen.

Der Schwenkhebel ist beispielsweise rotierbar an dem Gehäuse gelagert.

Eine auf den Schwenkhebel ausgeübte Kraft ist beispielsweise über die Umlenkanordnung oder über eine weitere Umlenkanordnung an die Puffeinheit, insbesondere den Ringkörper, übertragbar.

Bei einer beispielhaften Ausführungsform umfasst die Popcornmaschine nach der Erfindung ein Kühlgebläse. Das Kühlgebläse ist beispielsweise Bestandteil der Heizeinheit. Das Kühlgebläse kann in dem Gehäuse vorgesehen sein, insbesondere in diesem mittig angeordnet sein.

Bei einer bevorzugten Ausführungsform umfasst die Popcornmaschine nach der Erfindung eine speicherprogrammierte Steuerung (SPS).

Auf der speicherprogrammierten Steuerung sind beispielsweise Popcornrezepte speicherbar und/oder mittels der speicherprogrammierbaren Steuerung sind gespeicherte Popcornrezepte ausführbar.

Beispielsweise ist mittels der speicherprogrammierbaren Steuerung eine Temperatur des Heizelements steuerbar, insbesondere auf ein Grad genau, und/oder mittels der speicherprogrammierbaren Steuerung ist eine Drehzahl der Rühreinheit steuerbar.

Beispielsweise ist die Steuereinheit derart mit dem Temperatursensor verbunden, dass die Steuereinheit die Temperatur des Heizelements unter Berücksichtigung der von dem Temperatursensor erfassten Temperatur regelt.

Die speicherprogrammierte Steuerung ist beispielsweise derart ausgestaltet, dass diese auf Basis gespeicherter Rezepte die Temperatur der Heizeinheit und/oder die Drehzahl der Rühreinheit steuert.

Bei einer bevorzugten Ausführungsform umfasst die Popcornmaschine nach der Erfindung ein Bedienfeld. Beispielsweise ist das Bedienfeld mit der speicherprogrammierbaren Steuerung derart verbunden, dass Informationen der speicherprogrammierbaren Steuerung auf dem Bedienfeld anzeigbar sind und/oder von dem Nutzer an dem Bedienfeld eingegebene Informationen an die speicherprogrammierbare Steuerung übermittelbar sind.

Auf dem Bedienfeld sind somit beispielsweise auf der speicherprogrammierbaren Steuerung gespeicherte Rezepte anzeigbar. Die Rezepte können einzelne Handlungsanweisungen umfassen, welche auf dem Bedienfeld, insbesondere in entsprechender zeitlicher Abfolge angezeigt werden.

Beispielsweise ist die speicherprogrammierbare Steuerung derart ausgestaltet, dass diese nur die Informationen auf dem Bedienfeld anzeigt, welche ein Zutun des Nutzers erfordern. Übrige Informationen, welche also kein Zutun eines Nutzers erfordern, wie beispielsweise ein Einstellen der Temperatur des Heizelements und/oder ein Einstellen einer Drehzahl der Rühreinheit auf Basis eines ausgewählten, gespeicherten Rezeptes, führt die speicherprogrammierbare Steuerung direkt aus.

Informationen, welche ein Zutun des Nutzers bedürfen, sind beispielsweise welche Ausgangsprodukte, insbesondere zusammen mit einer Mengenangabe, in die Puffeinheit einzufüllen sind.

Über das Bedienfeld können auf der speicherprogrammierbaren Steuerung zu speichernde Rezepte eingegeben werden.

Auf der speicherprogrammierbaren Steuerung gespeicherte Rezepte sind beispielsweise über das Bedienfeld auswählbar, änderbar und/oder löschbar.

Im Folgenden ist die Erfindung anhand eines in der Zeichnung dargestellten Ausführungsbeispiels näher erläutert. Es zeigen:
- Figur 1: eine perspektivische Ansicht einer Popcornmaschine nach der Erfindung;
- Figur 2: eine Vorderansicht der Popcornmaschine aus Figur 1;
- Figur 3: eine Schnittansicht durch die Popcornmaschine aus Figur 2 entlang der Linie III-III;
- Figur 4: eine Figur 1 entsprechende Ansicht, wobei eine Puffeinheit der Popcornmaschine in einer zweiten Schwenkposition ist;
- Figur 5: eine Explosionsansicht der Puffeinheit; und
- Figur 6: eine Detailansicht des Bereichs A in Figur 3.

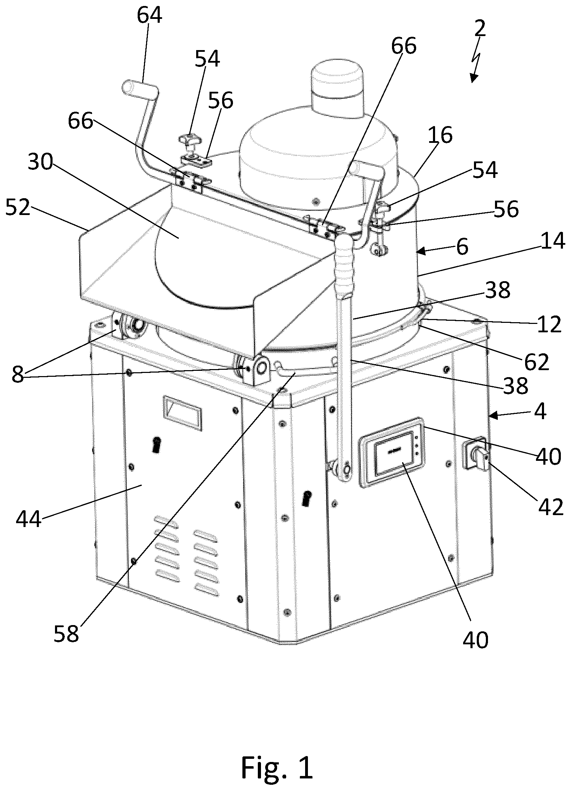

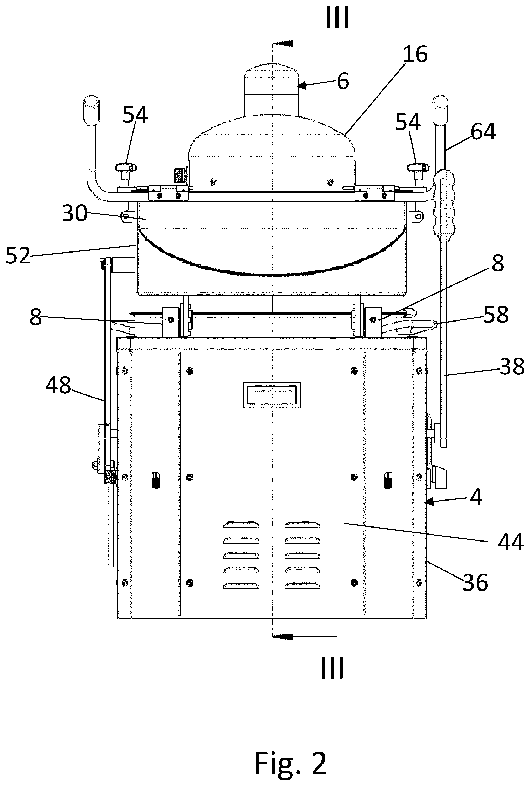

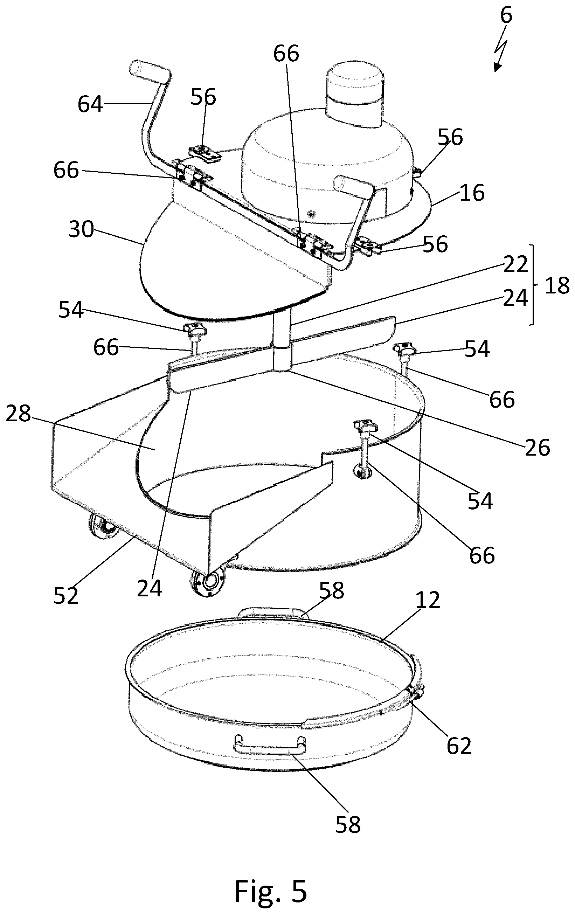

In den Figuren 1 bis 4 ist eine Popcornmaschine 2 nach der Erfindung dargestellt. Die Popcornmaschine 2 umfasst eine Heizeinheit 4 und eine Puffeinheit 6. Figur 5 zeigt eine Explosionsansicht der Puffeinheit 6.

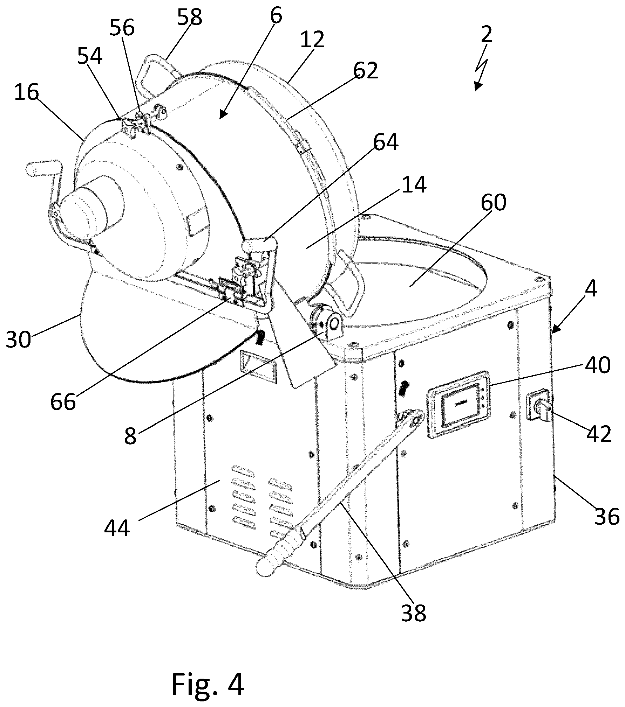

Die Puffeinheit 6 ist über eine Schwenkeinheit zwischen einer ersten Schwenkposition, welche in den Figuren 1 bis 3 gezeigt ist, und einer in Figur 4 gezeigten zweiten Schwenkposition schwenkbar an der Heizeinheit 4 gelagert. Die Schwenkeinheit besteht aus zwei Schwenklagern 8. Die zwei Schwenklager 8 ermöglichen ein Schwenken der Puffeinheit 6 relativ zu der Heizeinheit 4 um genau eine Achse. Wie insbesondere aus den Figuren 4 und 5 ersichtlich ist, ist die Puffeinheit 6 an einem Ringkörper 14 dieser schwenkbar gelagert. Die Schwenklager 8 greifen also an dem Ringkörper 14 der Puffeinheit 6 an.

Die Puffeinheit 6 umfasst eine Bodenwanne 12 und einen Deckel 16. Die Bodenwanne 12 verschließt den Ringkörper 14 an einem ersten Ende in Ringkörper-Achsrichtung. Die Bodenwanne 12 ist mittels eines Befestigungselements 62 an dem Ringkörper 14 lösbar fixiert. Zur leichteren Handhabung umfasst die Bodenwanne 12 Bodenwannengriffe 58.

Der Deckel 16 verschließt den Ringkörper 14 an dem in Ringkörper-Achsrichtung zweiten Ende, welches dem ersten Ende gegenüberliegt. Der Deckel 16 ist über eine Befestigungsanordnung an dem Ringkörper 14 lösbar fixiert. Die Befestigungsanordnung umfasst drei drehbar an den Ringkörper 14 gelagerte Gewindeschrauben 68, auf welche jeweils eine Mutter 54 schraubbar ist. Ferner umfasst die Befestigungsanordnung Befestigungselementaufnahmen 56, welche fest an dem Deckel 16 fixiert sind. Zur Fixierung des Deckels 16 an dem Ringkörper 14 sind die Gewindeschrauben 68 derart rotierbar, dass sich diese jeweils durch eine Betreffende der Befestigungselementaufnahmen 56 erstrecken. Die Muttern 54 werden sodann derart auf die Gewindeschrauben 68 aufgeschraubt, dass die Muttern 54 an den Befestigungselementaufnahmen 56 zur Anlage kommen. Der Deckel 16 ist somit, insbesondere kraft- und/oder formschlüssig an dem Ringkörper 14 lösbar fixiert.

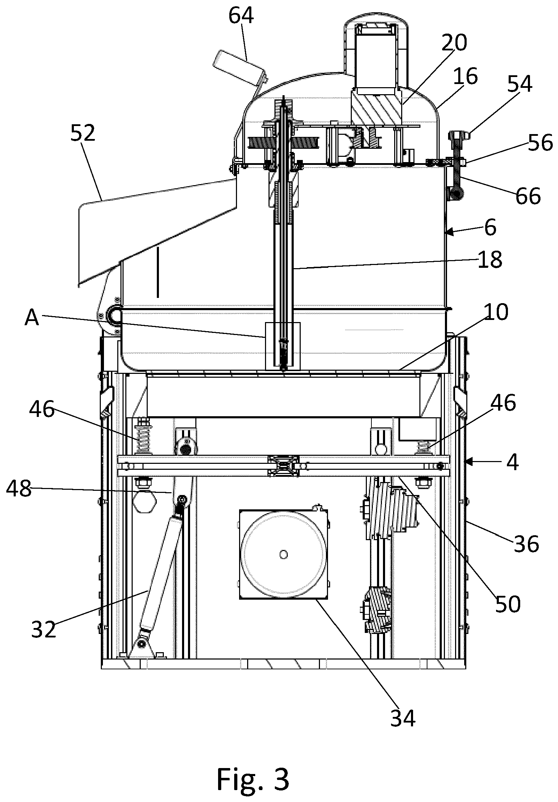

Wie aus Figur 3 ersichtlich ist, ist in dem Deckel 16 eine Antriebseinheit 20 für eine Rühreinheit 18 vorgesehen. Die Rühreinheit 18 ist in einem von der Bodenwanne 12, dem Ringkörper 14 und dem Deckel 16 definierten Puffraum angeordnet. Die Rühreinheit 18 umfasst eine Antriebswelle 22, welche sich in Ringkörper-Achsrichtung erstreckt, und zwei sich orthogonal zu der Antriebswelle 22 erstreckende Rührkämme 24. Die Rührkämme 24 sind über ein Verbindungselement 26 miteinander verbunden. Das Verbindungselement 26 ist auf ein der Antriebseinheit 20 abgewandtes Ende der Antriebswelle 22 aufgeschoben und insbesondere mit dieser lösbar verrastet.

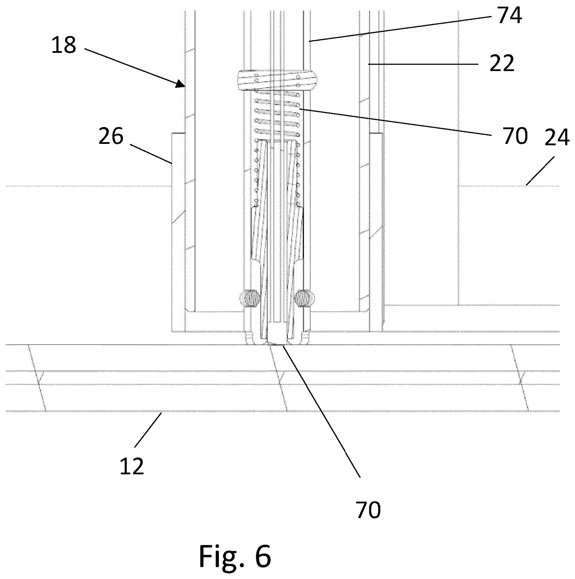

Wie aus der in Figur 6 dargestellten Detailansicht des Bereichs A in Figur 3 ersichtlich ist, ist die Antriebswelle 22 in Form eines Hohlrohrs ausgestaltet, das an einem in Antriebswellen-Achsrichtung der Antriebseinheit 20 abgewandten Ende offen ist.

In der Antriebswelle 22 ist ein Führungsrohr 74 angeordnet. Auch das Führungsrohr 74 ist als Hohlrohr ausgebildet, das an einem der Antriebseinheit 20 abgewandten Ende offen ist. An dem der Antriebseinheit 20 zugewandten Ende ist das Führungsrohr 74 fest mit der Antriebswelle 22 verbunden bzw. an der Antriebswelle 22 fixiert, insbesondere derart, dass eine Längsmittelachse der Antriebswelle 22 einer Längsmittelachse des Führungsrohrs 74 entspricht.

In dem Führungsrohr 74 ist ein Temperatursensor 70 derart beweglich gelagert, dass dieser in genau eine Richtung, insbesondere in Antriebswellen-Achsrichtung, translatorisch beweglich ist. Bevorzugt ist der Temperatursensor 70 derart beweglich gelagert, dass dieser durch das offene Ende der Antriebswelle 22 zumindest geringfügig aus dieser austreten kann, so dass dieser aus der Antriebswelle 22 hervorsteht und an der Bodenwanne 12 zu Anlage gebracht werden kann.

In der Antriebswelle 22 ist ferner ein Federelement 72, insbesondere eine Spiralfeder, vorgesehen, welche den Temperatursensor 70 mit einer in Richtung des offenen Endes der Antriebswelle 22 wirkenden Kraft beaufschlagt. Das Federelement 72 ist bevorzugt derart ausgebildet, dass dieses den Temperatursensor 70 gegen die Bodenwanne 12 drückt. Somit stellt das Federelement 72 sicher, dass zwischen dem Temperatursensor 70 und der Bodenwanne 12 ein für eine Temperaturmessung ausreichender Kontakt besteht.

Zum Ausbringen von in der Puffeinheit 6 gebildeten Popcorns weist der Ringkörper 14 eine seitliche Aussparung 28 auf. An die Aussparung 28 grenzt eine Entleerungsrampe 52 an.

Zum Verschließen der Aussparung 28 ist ein Verschlusselement 30 vorgesehen. Das Verschlusselement 30 ist an dem Deckel 16, insbesondere mittels zweier Scharniere 66, zwischen einer die Aussparung 28 verschließenden Verschlussposition und einer die Aussparung 28 freigebenden Freigabeposition schwenkbar gelagert. Zum Schwenken des Verschlusselements 30 zwischen der Freigabeposition und der Verschlussposition ist an dem Verschlusselement 30 ein Entleerungshebel 64 vorgesehen.

Wie ferner aus Figur 3 ersichtlich ist, ist die Bodenwanne 12 in der ersten Schwenkposition der Puffeinheit 6 in einer Vertiefung 60 der Heizeinheit 4 angeordnet. Insbesondere ist ein dem Ringkörper 14 der Bodenwanne 12 abgewandter Bereich der Bodenwanne 12 vollständig in der Vertiefung 60 angeordnet. Die Bodenwanne 12 liegt in der ersten Schwenkposition der Puffeinheit 6 flächig auf einem Heizelement 10 der Heizeinheit 4 auf. Das Heizelement 10 ist über Lager 46 an einem Gehäuse 36 der Heizeinheit 4 gehäusefest gelagert. Die Lager 46 sind derart ausgestaltet, dass diese eine Bewegung des Heizelements 10 in Popcornmaschinen-Hochrichtung, also in Richtung der Puffeinheit 6, wenn diese in der ersten Schwenkposition ist, ermöglichen. Hierzu umfassen die Lager 46 jeweils eine Spiralfeder. Die Lager sind auf einer gehäusefesten Lagerplatte 50, welche fest mit dem Gehäuse 36 verbunden ist, angeordnet.

In dem Gehäuse 36 ist ferner eine Gasfeder 32 vorgesehen. Die Gasfeder 32 stützt sich an einem ersten Ende gehäusefest ab. Insbesondere ist die Gasfeder 32 an einem ersten Ende rotierbar an dem Gehäuse 36 gelagert. An dem zweiten Ende ist die Gasfeder 32 über eine Umlenkanordnung 48 derart mit der Puffeinheit 6, insbesondere dem Ringkörper 14, verbunden, dass die Gasfeder 32 ein Schwenken der Puffeinheit 6 aus der ersten Schwenkposition in die zweite Schwenkposition unterstützt, insbesondere dadurch, dass die Gasfeder 32 die Puffeinheit 6 mit einer in die zweite Schwenkposition wirkenden Kraft beaufschlagt. Zudem dämpft die Gasfeder 32 ein Verschwenken der Puffeinheit 6 aus der zweiten Schwenkposition in die erste Schwenkposition dadurch.

Zum Verschwenken der Puffeinheit 6 zwischen der ersten Schwenkposition und der zweiten Schwenkposition ist ein Schwenkhebel 38 vorgesehen. Der Schwenkhebel 38 ist rotierbar an dem Gehäuse 36 gelagert. Eine auf den Schwenkhebel 38 ausgeübte Kraft wird über die Umlenkanordnung 48 oder über eine weitere Umlenkanordnung an die Puffeinheit 6, insbesondere den Ringkörper 14, übertragen.

In dem Gehäuse 36 ist ein Kühlgebläse 34 zur Kühlung des von dem Gehäuse 36 definierten Hohlraums vorgesehen.

Das Gehäuse 36 umfasst eine Wartungstür 44. Durch die Wartungstür 44 ist ein von dem Gehäuse 36 definierter Hohlraum zu Wartungs- oder Montagezwecken zugänglich.

Die Popcornmaschine 2 umfasst ferner eine Steuereinheit, insbesondere in Form einer speicherprogrammierbaren Steuerung (SPS). Auf der speicherprogrammierbaren Steuerung sind Popcornrezepte speicherbar. Ferner sind mittels der speicherprogrammierbaren Steuerung eine Temperatur des Heizelements 10 sowie eine Drehzahl der Rühreinheit 18 steuerbar.

Beispielsweise ist die Steuereinheit derart mit dem Temperatursensor 70 verbunden, dass die Steuereinheit die Temperatur des Heizelements 10 unter Berücksichtigung einer von dem Temperatursensor 70 erfassten Temperatur regelt.

Die speicherprogrammierbare Steuerung ist mit einem Bedienfeld 40 derart verbunden, dass Informationen der speicherprogrammierbaren Steuerung auf dem Bedienfeld 40 anzeigbar sind. Ferner sind auf der speicherprogrammierbaren Steuerung zu speichernde Informationen von einem Nutzer über das Bedienfeld eingebbar.

An dem Gehäuse 36 ist ein Zentralschalter 42 vorgesehen, mittels welchem die Popcornmaschine einschaltbar und ausschaltbar ist.

### Bezugszeichenliste:

- 2: Popcornmaschine
- 4: Heizeinheit
- 6: Puffeinheit
- 8: Schwenklager
- 10: Heizelement
- 12: Bodenwanne
- 14: Ringkörper
- 16: Deckel
- 18: Rühreinheit
- 20: Antriebseinheit
- 22: Antriebswelle
- 24: Rührkamm
- 26: Verbindungselement
- 28: Aussparung
- 30: Verschlusselement
- 32: Gasfeder
- 34: Kühlgebläse
- 36: Gehäuse
- 38: Schwenkhebel
- 40: Bedienfeld
- 42: Zentralschalter
- 44: Wartungstür
- 46: Lager
- 48: Umlenkanordnung
- 50: gehäusefeste Lagerplatte
- 52: Entleerungsrampe
- 54: Mutter
- 56: Befestigungselementaufnahmen
- 58: Bodenwannengriff
- 60: Vertiefung
- 62: Befestigungselement
- 64: Entleerungshebel
- 66: Scharnier
- 68: Gewindeschrauben
- 70: Temperatursensor
- 72: Federelement
- 74: Führungsrohr

## Patentansprüche

1. Popcornmaschine zur Herstellung von Popcorn aus Mais, umfassend eine Heizeinheit (4) mit einem Heizelement (10) und eine Puffeinheit (6), **dadurch gekennzeichnet, dass** die Puffeinheit (6) über eine Schwenkeinheit derart schwenkbar mit der Heizeinheit (4) verbunden ist, dass die Puffeinheit (6) zwischen einer ersten Schwenkposition, in der die Puffeinheit (6) insbesondere auf dem Heizelement (10) aufliegt, und einer zweiten Schwenkposition schwenkbar ist, in der die Puffeinheit (6) von dem Heizelement (10) beabstandet ist, wobei die Puffeinheit (6) eine Bodenwanne (12) umfasst, die lösbar an einem Ringkörper (14) der Puffeinheit (6) fixiert ist.

2. Popcornmaschine nach Anspruch 1, **dadurch gekennzeichnet, dass** die Bodenwanne (12) in der ersten Schwenkposition flächig auf dem Heizelement (10) aufliegt und/oder in einer Vertiefung (60) der Heizeinheit (4) angeordnet ist.

3. Popcornmaschine nach Anspruch 1 oder 2, **dadurch gekennzeichnet, dass** das Heizelement (10) an einem Gehäuse (36) der Heizeinheit (4) federnd gelagert ist.

4. Popcornmaschine nach einem der Ansprüche 1 bis 3, **dadurch gekennzeichnet, dass** die Schwenkeinheit an dem Ringkörper (14) angreift.

5. Popcornmaschine nach einem der Ansprüche 1 bis 4, **dadurch gekennzeichnet, dass** die Puffeinheit (6) einen Deckel (16) umfasst, welcher an dem Ringkörper (14) lösbar fixiert ist und den Ringkörper (14) an einer der Bodenwanne (12) gegenüberliegenden Seite verschließt.

6. Popcornmaschine nach einem der Ansprüche 1 bis 5, **dadurch gekennzeichnet, dass** die Puffeinheit (6) eine Rühreinheit (18) und eine Antriebseinheit (20) zum Antreiben der Rühreinheit (18) umfasst.

7. Popcornmaschine nach Anspruch 6 in Verbindung mit Anspruch 5, **dadurch gekennzeichnet, dass** die Antriebseinheit (20) an oder in dem Deckel (16) angeordnet ist.

8. Popcornmaschine nach einem der Ansprüche 1 bis 7, **gekennzeichnet durch** einen Temperatursensor (70) zur Messung einer Temperatur der Bodenwanne (12), der an der Rühreinheit (18) derart beweglich gelagert ist, dass dieser mit der Bodenwanne (12) in Kontakt bringbar ist.

9. Popcornmaschine nach Anspruch 8, **gekennzeichnet durch** ein Federelement (72), welches den Temperatursensor (70) mit einer in Richtung der Bodenwanne (12) wirkenden Kraft beaufschlagt.

10. Popcornmaschine nach einem der Ansprüche 1 bis 9, **dadurch gekennzeichnet, dass** der Ringkörper (14) eine Aussparung (28) zum Ausbringen von Popcorn aus der Puffeinheit (6) umfasst.

11. Popcornmaschine nach Anspruch 10, **dadurch gekennzeichnet, dass** die Aussparung (28) mit einem Verschlusselement (30) verschließbar ist, welches zwischen einer die Aussparung (28) verschließenden Verschlussposition und einer die Aussparung (28) freigebenden Freigabeposition verschwenkbar an dem Deckel (16) gelagert ist.

12. Popcornmaschine nach Anspruch 11, **dadurch gekennzeichnet, dass** das Verschlusselement (30) derart an dem Deckel (16) gelagert ist, dass durch Verschwenken der Puffeinheit (6) aus der ersten Position in die zweite Position das Verschlusselement (30) aus der Verschlussposition in die Freigabeposition verschwenkt wird.

13. Popcornmaschine nach einem der Ansprüche 1 bis 12, **gekennzeichnet durch** eine Gasfeder (32) zur Unterstützung einer Schwenkbewegung der Puffeinheit (6).

14. Popcornmaschine nach Anspruch 13, **dadurch gekennzeichnet, dass** die Gasfeder (32) an einem ersten Ende an der Heizeinheit (4), insbesondere dem Gehäuse (36) der Heizeinheit (4), gelagert ist und an dem zweiten Ende über eine Umlenkanordnung (48) mit der Puffeinheit (6) verbunden ist.

15. Popcornmaschine nach einem der Ansprüche 1 bis 14, **dadurch gekennzeichnet, dass** die Heizeinheit (4) ein Kühlgebläse (34) umfasst.

16. Popcornmaschine nach einem der Ansprüche 1 bis 15, **gekennzeichnet durch** eine speicherprogrammierbare Steuerung, auf welcher Popcornrezepte speicherbar und mittels welcher die gespeicherten Popcornrezepte ausführbar sind und/oder mittels welcher eine Temperatur des Heizelements (10) und/oder eine Drehzahl der Rühreinheit (18) steuerbar ist.

17. Popcornmaschine nach Anspruch 16, **gekennzeichnet durch** ein Bedienfeld (40), welches mit der speicherprogrammierbaren Steuerung derart verbunden ist, dass Informationen der speicherprogrammierbaren Steuerung auf dem Bedienfeld (40) anzeigbar sind und/oder von dem Nutzer an dem Bedienfeld (40) eingegebene Informationen an die speicherprogrammierbare Steuerung übermittelbar sind.
